# EUROPEAN PATENT SPECIFICATION

(11) **EP 1 967 102 B1**
(45) Date of publication and mention of the grant of the patent: **23.09.2009**
(21) Application number: 08003641.1
(22) Date of filing: 28.02.2008
(51) Int. Cl.: A47J 36/24, A47J 39/00

(54) **Heater for feeding-bottle**
Wärmer für eine Saugflasche
Dispositif de chauffage pour biberon

(30) Priority: 05.03.2007 IT UD20070048
(43) Date of publication of application: 10.09.2008
(73) Proprietor: Doro, Elio, 31020 San Pietro di Feletto (TV) (IT)
(72) Inventor: Doro, Elio, 31020 San Pietro di Feletto (TV) (IT)
(74) Representative: D'Agostini, Giovanni

(56) References cited:
- EP-A- 0 036 612
- WO-A-20/05041733
- US-A1- 2006 188 418
- US-B1- 6 617 552

## Description

### object

This invention is a heater for feeding-bottles, whose characteristics correspond to the precharacterizing part of main claim.

### Application field

The application field is therefore substantially directed to the preheating of feeding-bottle phials or respective food for children that are normally stored and held in a refrigerator.

### State of the art and respective problems

At the present time, it is well known that very consistent problems arise for the use in the environments where a large quantity of ready-to-use feeding bottles must be immediately available, considering, in particular, environments for newly-born babies, day nurseries, etc.

In these cases, at the present time, feeding-bottles are kept in a refrigerator, but then must be heated with the means available which are certainly not very suitable for this function.

It is a fact that the microwave systems or current ovens etc. are unable to supply a suitable uniform heating for the above-mentioned and in particular they can over-heat or under-heat, with the consequence of overly hot or overly cold food which is certainly not healthy for a child and in particular for a newborn.

Other problems can moreover arise without suitable temperature control on the bottles, because, as known, they are made of plastic material, and plastic material above a certain temperature emits substances which are toxic, not to say lethal, for new born children.
US2006/188418 A1 (Park YOON ...) 24 August 2006 discloses a multifunctional child care storage for storing and treating infant care products including a plurality of functional compartments provided in a main body and having individual spaces divided by a partition member, wherein the functional compartments including a refrigerating compartment for storing the infant care products at a reduced temperature, a refrigerating and heating compartment for storing, cooling and heating the infant care products, a warming-in-water compartment for warming up the infant care products and a sterilizing compartment for sterilizing ad dry said products, a control unit to control the functional compartments to maintain said compartments at a predetermined temperature.

### The invention's aim

The invention's aim is to resolve the above-mentioned problems and drawbacks realizing a specific apparatus which is particularly functional and suitable for said function.

### Solution of the problem and identification of the invention's features

The problem is resolved with the characteristics of the main claim. The sub-claims represent advantageous preferential solutions that supply better efficiency.

### Advantages

In this way, the advantage is being able to promptly have the whole quantity of feeding-bottles ready to use at the exact desired temperature and therefore without the necessity of separate preparation and with the absolute certainty, not only of achieving the required temperature, but also of a homogeneous temperature throughout the whole food.

### Description of the preferential solution

For a better understanding the invention is described in its preferential solution with the help of attached figures, wherein:

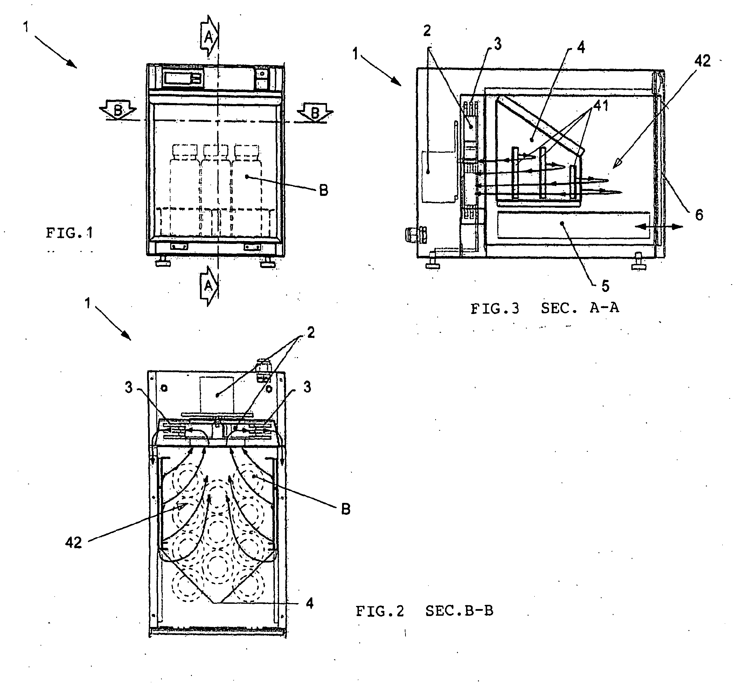

- Fig. 1. is a front sectional view of the apparatus.
- Fig. 2. is a sectional view from above according to B-B of Fig. 1.
- Fig. 3. is a side sectional view according to A-A of Fig. 1.

### Detailed description of the invention as to the figures

According to the figures, one can observe that the invention is a heating apparatus for feeding-bottles and/or milk for children and/or newborn and/or premature babies having a containing structure (1) for feeding-bottles (B) with a front access door (6) with an extractable-base drawer (5) with several holes in the false-bottom to house said feeding-bottles in a standing position.

At the rear of the feeding-bottle compartment, and, therefore, at said drawer, there is a power-operated fan (2) surrounded by electric resistors (3) that conveys the air to the side deflectors (4) which are on each side of said extractable drawer, practically on the sides of the compartment, having several slits (41) which deflect the heated airflow conveyed by said fan (2) in convergence and opposition towards the centre and the rear (42) substantially creating a semi-whirling motion that assists the uniform heating of said feeding-bottles in an extremely functional and controlled way.

The electric operating, controlling and timing controls, are situated on the front of the apparatus as on normal electrical household appliances.

The air oven is very functional and excludes the preheating danger present in other methods. It is made entirely of stainless steel able to bring the milk from 4°C to 24/25°C in 20 minutes, keeping it hot for 30 min. at cycle end, with door closed.
This solution replaces old microwave or bain-marie systems.

The forced ventilation heating system safely avoids the dangers of infections and the difficulty in controlling the temperatures to be reached and/or maintained for a long time.

Advantageously, the electric control apparatus includes at least one timer and a temperature sensor.
Generally, the temperature of the product to be inserted will be between 4°C +/- 1°C.

The apparatus includes an ON/OFF button that lights to indicate that is under voltage as does the display of the thermostat/timer.

The feeding-bottle extracted after the indication of possible bell or signal will have a temperature of 24/25°C. A control system will be able to stop the heating cycle once it has reached the temperature.

Essentially, the air to be heated is sucked by the fan, centrally to the back and pushed against the resistance that heats it and continues across the obligatory route to the deflectors that convey the hot flow in the adequately sized and shaped slits (41) until it envelopes each feeding-bottle, gradually heating the milk to the core homogenously.

The equilibrium between the temperature of the milk (at the end of the cycle) and the speed of the hot air determines the heating time, that is about 20 minutes.
The end of the cycle is signalled by the thermostat/timer and an acoustic signal.

It is also possible to remove the feeding-bottles from the oven 30 minutes from the end of the cycle, naturally the temperature reached being maintained.

## Claims

1. Heating apparatus for feeding-bottles and/or milk for children and/or newborn and/or premature babies having a containing structure (1) for feeding-bottles (B) with front access door (6), including:
a) an extractable base drawer (5) in the heating zone with several compartments to house said bottles in a standing position,
b) heating means based on hot air circulation in said heating zone,
c) temperature control means and timing means to signal and/or stop a heating cycle once a predetermined temperature is reached
**characterised in that** it comprises two opposite side deflectors (4) placed internally to said containing structure (1) by means of which the hot air circulation in said heating zone occurs, said opposite side deflectors (4) having substantially vertical or inclined slits (41).

2. Apparatus according to previous claim, **characterised in that** said slits (41) are of different height.

3. Apparatus according to any of the claims, **characterised in that** said slits (41) have protruding deflexion fins to incline the flow towards the centre and the rear of the compartment.

4. Apparatus according to any of the previous claims, **characterised in that** said heating means based on hot air circulation include a power-operated fan (2) associated to electric resistors (3) at the back of said bottle-containing compartment, said fan having a horizontal axis and a suction function through openings situated on the bottom of said compartment, or rather, in respective said compartment separating wall.

5. Apparatus according to any of the previous claims, **characterised in that** it includes a frontal control panel substantially placed on the top side having a frontal lower access door (6).

6. Apparatus according to any of the previous claims, **characterised in that** it includes a frontal access door (6).

7. Apparatus according to the previous claim, **characterised in that** said frontal door (6) is a pivot-hinged flap.

8. Apparatus according to claim 1 and to any of the previous claims,
**characterised in that** said extractable drawer (5) includes holding places for the bottles to be heated in order to substantially maintain them in a spaced, standing position when extracting them in an upwards direction.

9. Apparatus according to claim 1 and any of the previous claims,
**characterised in that** said extractable drawer (5) is equipped with extraction tracks that allow for its almost complete extraction from the apparatus with the door (6) opened.

## Patentansprüche

1. Erhitzer für Nuckelflaschen und/oder Milch für Kinder und/oder Neugeborene und/oder Frühchen mit einem Behälter (1) für Nuckelflaschen (B) mit vorderer Zugangsklappe (6), einschließlich:
a) einer ausziehbaren Basisschublade (5) im Erhitzungsbereich mit mehreren Kammern, um die Flaschen stehend aufzunehmen,
b) Heizmitteln auf der Grundlage von Heißluftumlauf im Erhitzungsbereich,
c) Temperatursteuermitteln und Zeitsteuermittein, um einen Erhitzungszyklus signalisieren und/oder zu stoppen, wenn eine vorherbestimmte Temperatur erreicht ist
**gekennzeichnet dadurch dass** er zwei gegenüberliegende Seitenablenker (4) in dem Behälter (1) umfasst, wodurch der Heißluftumlauf in besagtem Erhitzungsbereich zustandekommt, wobei die gegenüberliegenden Seitenablenker (4) im wesentlichen senkrechte oder schräge Schlitze (41) aufweisen.

2. Vorrichtung nach dem vorherigen Anspruch, **gekennzeichnet dadurch, dass** die Schlitze (41) von verschiedener Höhe sind.

3. Vorrichtung gemäß jedem beliebigen der Patentansprüche, **gekennzeichnet dadurch, dass** besagte Schlitze (41) vorspringende Ablenkungsrippen haben, um die Strömung zur Mitte und zum hinteren Teil der Kammer zu leiten.

4. Vorrichtung nach einem beliebigen der vorherigen Patentansprüche, **gekennzeichnet dadurch, dass** die Heizmittel auf der Grundlage von Heißluftumlauf ein Gebläse mit Motorantrieb (2) umfassen, verbunden mit elektrischen Widerständen (3) auf der Rückseite der Flaschenkammer, wobei das Gebläse eine waagrechte Achse hat und eine Ansaugfunktion durch Öffnungen auf dem Boden der Kammer, oder vielmehr in der Kammertrennwand.

5. Vorrichtung nach einem beliebigen der vorherigen Patentansprüche, **gekennzeichnet dadurch, dass** sie ein frontales Bedienungsfeld umfasst, im wesentlichen auf der Oberseite, mit einer frontalen unteren Zugangsklappe (6).

6. Vorrichtung nach einem beliebigen der vorherigen Patentansprüche, **gekennzeichnet dadurch, dass** sie eine frontale Zugangsklappe (6) umfasst.

7. Vorrichtung nach dem vorherigen Anspruch, **gekennzeichnet dadurch, dass** besagte frontale Klappe (6) eine Klappe mit Scharnier ist.

8. Vorrichtung nach Anspruch 1 und nach jedem beliebigen der vorherigen Patentansprüche, **gekennzeichnet dadurch, dass** die ausziehbare Schublade (5) Halteplätze für die zu erhitztenden Flaschen umfasst, um sie im wesentlichen in einer beabstandeten aufrechten Position zu halten, wenn man sie nach oben herauszieht.

9. Vorrichtung nach Anspruch 1 und jedem beliebigen der vorherigen Patentansprüche, **gekennzeichnet dadurch, dass** die ausziehbare Schublade (5) mit Auszugsschienen ausgestattet ist, zum fast vollständigen Ausziehen aus der Vorrichtung bei geöffneter Klappe (6).

## Revendications

1. Dispositif de chauffage pour biberon et/ou lait pour enfants et/ou nouveaux-nés et/ou bébés prématurés ayant un récipient (1) pour biberons (b) avec porte d'accès antérieure (6), comprenant :
a) un tiroir de base extractible (5) dans la zone de chauffage avec plusieurs compartiments pour contenir lesdits biberons dans une position debout,
b) moyens de chauffage basés sur la circulation d'air chaud dans ladite zone de chauffage,
c) moyens de régulation de la température et moyens de temporisation pour signaler et/ou arrêter un cycle de chauffage dès qu'une température prédéterminée est atteinte
**caractérisé en ce qu'**il comprend deux déflecteurs latéraux opposés (4) placés à l'intérieur dudit récipient (1) au moyen desquels la circulation d'air chaud dans ladite zone de chauffage se vérifie, lesdits déflecteurs latéraux opposés (4) ayant substantiellement des fentes verticales ou inclinées (41).

2. Dispositif conformément à la revendication précédente, **caractérisé en ce que** lesdites fentes (41) sont de hauteur différente.

3. Dispositif selon l'une quelconque des revendications, **caractérisé en ce que** lesdites fentes (41) ont des arêtes de déflexion saillantes, pour guider le flux vers le centre et l'arrière du compartiment.

4. Dispositif selon l'une quelconque des revendications précédentes, **caractérisé en ce que** lesdits moyens de chauffage basés sur la circulation d'air chaud incluent un ventilateur à moteur (2) associé à des résisteurs électriques (3) à l'arrière dudit compartiment contenant les biberons, ledit ventilateur ayant un axe horizontal et une fonction d'aspiration à travers des ouvertures situées sur le fond dudit compartiment, ou plutôt dans ladite paroi de séparation du compartiment.

5. Dispositif selon l'une quelconque des revendications précédentes, **caractérisé en ce qu'**il inclut un tableau de contrôle frontal placé substantiellement du côté supérieur ayant une porte d'accès frontale inférieure (6).

6. Dispositif selon l'une quelconque des revendications précédentes, **caractérisé en ce qu'**il inclut une porte d'accès frontale (6).

7. Dispositif conformément à la revendication précédente, **caractérisé en ce que** ladite porte frontale (6) est un abattant à charnière.

8. Dispositif selon la revendication 1 et n'importe quelle revendication précédente, **caractérisé en ce que** ledit tiroir extractible (5) inclut des endroits de maintien pour les biberons à chauffer afin de les maintenir substantiellement dans une position debout espacée lorsqu'on les extrait vers le haut.

9. Dispositif selon la revendication 1 et n'importe quelle revendication précédente, **caractérisé en ce que** ledit tiroir extractible (5) est équipé de rails d'extraction qui permettent l'extraction presque complète du dispositif avec la porte (6) ouverte.
